**Europäisches Patentamt**

**European Patent Office**

**Office européen des brevets**

(19)

(11) Veröffentlichungsnummer: **0 338 218 B1**

# EUROPÄISCHE PATENTSCHRIFT

(12)

(45) Veröffentlichungstag der Patentschrift: **15.09.93**

(51) Int. Cl.⁵: **G08B** 17/06, G08B 17/00

(21) Anmeldenummer: **89103352.4**

(22) Anmeldetag: **25.02.89**

(54) **Verfahren zur Brandfrüherkennung.**

(30) Priorität: **30.03.88 CH 1193/88**
**23.12.88 CH 4760/88**

(43) Veröffentlichungstag der Anmeldung:
**25.10.89 Patentblatt 89/43**

(45) Bekanntmachung des Hinweises auf die
Patenterteilung:
**15.09.93 Patentblatt 93/37**

(84) Benannte Vertragsstaaten:
**AT BE CH DE ES FR GB IT LI LU NL SE**

(56) Entgegenhaltungen:
**EP-A- 0 024 370**    **CH-A- 572 252**
**DE-A- 3 419 802**    **DE-U- 8 620 624**
**DE-U- 8 715 667**    **FR-A- 2 441 227**
**US-A- 3 742 474**    **US-A- 4 065 758**

(73) Patentinhaber: **CERBERUS AG**
**Alte Landstrasse 411**
**CH-8708 Männedorf(CH)**

(72) Erfinder: **Ryser, Peter**
**Rainwiesenstrasse 1**
**CH-8712 Stäfa(DE)**
Erfinder: **Strässler, Sigfrid**
**Segelhalde 40**
**CH-5405 Baden-Dättwil(DE)**

(74) Vertreter: **Tiemann, Ulrich, Dr.-Ing.**
**c/o Cerberus AG Patentabteilung Alte Land-**
**strasse 411**
**CH-8708 Männedorf (CH)**

EP 0 338 218 B1

Rank Xerox (UK) Business Services
(3.10/3.6/3.3.1)

**Beschreibung**

Die Erfindung betrifft ein Verfahren zur Brandfrüherkennung gemäß dem Oberbegriff des Patentanspruchs 1, sowie einen Brandmelder zur Durchführung deß Verfahrens gemäß Patentanspruch 4.

Automatische Brandmelder dienen der rechtzeitigen Erkennung von Bränden und somit zum Schutz von Menschenleben und Sachwerten. Sie sind zu einem nicht mehr fortzudenkenden Bestandteil von Schutzkonzepten und Sicherheitssystemen geworden. Insbesondere waren es die Erfindungen auf dem Gebiete der Rauchdetektion, die eine wirkungsvolle Frühwarnung gestatteten. Die Installation von Millionen automatischer Brandmelder weltweit beweist den Erfolg der aus diesen Erfindungen hervorgegangenen Produkte. Die hohe Empfindlichkeit heutiger Rauchmelder gestattet die Alarmierung in einem so frühen Stadium, daß in den meisten Fällen rechtzeitig geeignete Maßnahmen eingeleitet werden können. Allerdings ist mit der hohen Ansprechempfindlichkeit auch die Wahrscheinlichkeit einer Fehlauslösung durch brandsimulierende Täuschungsgrößen gestiegen. In Folge der zunehmenden Dichte von Brandmeldesystemen ist hierdurch ein Problem entstanden, welches zu einer ständig wachsenden Bedrohung für das Ansehen dieser Technik geworden ist.

Die Hersteller von automatischen Brandmeldesystemen haben diese Gefahr erkannt und bemühen sich seit Jahren, durch Weiterentwicklung bekannter Detektionsprinzipien, sowie durch die Anwendung verbesserter Signalauswertungen dieser Bedrohung zu begegnen. Alle Verbesserungen haben zum Ziel, die Zahl der Fehlalarme zu reduzieren, ohne gleichzeitig den Vorteil der Frühwarnung aufzugeben, d.h. die Empfindlichkeit zu reduzieren.

Eine Möglichkeit der Fehlalarmreduktion besteht darin, mehrere Brandkriterien für eine Alarmauslösung heranzuziehen. Man spricht in diesem Fall von sogenannten "Mehrkriterien-Meldern". Eine Alarmauslösung findet nur dann statt, wenn die detektierten Brandkenngrößen gleichzeitig vorgegebene Schwellenwerte überschreiten. Hierdurch werden alle diejenigen Täuschungsgrößen eliminiert, die nur auf einen der verwendeten Sensoren einwirken. Ein Nachteil dieser Methoden besteht darin, daß echte Brände eventuell nicht detektiert werden, weil einer der verwendeten Sensoren kein Signal abgibt. Dies kann der Fall sein, wenn einer der Sensoren defekt ist oder wenn einer der Sensoren kein Signal abgibt, weil die Brandkenngröße, auf die er anspricht nicht vorhanden ist.

Andere Verfahren versuchen, durch die Anwendung spezieller Algorithmen die Sensorsignale derart auszuwerten, daß nur brandspezifische Verläufe zu einem Alarm führen. Hierbei werden brandspezifische Daten als Referenzwerte abgespeichert und mit den Sensordaten laufend verglichen. Durch die Anwendung von Korrelationsmethoden kann für die Sensorsignale die Wahrscheinlichkeit berechnet werden, ob es sich um einen echten Brand oder um eine Täuschung handelt. Obwohl mit beiden Methoden erhebliche Fortschritte erzielt wurden, darf man das Fehlalarmproblem noch keinesfalls als gelöst betrachten. Es ist auch zu bedenken, daß die bisherigen Ergebnisse nur unter Aufwendung beachtlicher elektronischer Mittel erreicht wurden, so daß das Kosten/Nutzen-Verhältnis zum Teil in Frage gestellt werden muß. Es besteht jedoch kein Zweifel daran, daß ein Brandsensor, der auf Grund seiner spezifischen Eigenschaften nur auf echte Brandkenngrößen und nicht auf Täuschungsgrößen anspricht, die beste anzustrebende Lösung darstellt.

Untersucht man die beim Entstehen eines Brandes auftretenden Kenngrößen, so stellt man fest, daß neben dem Auftreten von Verbrennungsprodukten, wie Gasen oder Aerosolen, immer ein Temperaturanstieg verzeichnet werden kann. Das heißt ohne Wärmequelle, sei es zur Initialisierung oder durch die Eigenständigkeit des Brandes selbst, gibt es kein Schadenfeuer. Jeder Brand führt früher oder später zu einer Erhöhung der Umgebungstemperatur. Deshalb sind die ältesten und heute noch am häufigsten anzutreffenden Brandmelder Temperaturdetektoren. Allerdings erfolgt bei diesen Meldern eine Alarmauslösung in der Regel erst bei Umgebungstemperaturen über 60 °C, was bedeutet, daß die Brandentwicklung bereits weit fortgeschritten ist und deshalb von einer echten Frühwarnung nicht die Rede sein kann.

Bestrebungen, die Empfindlichkeit von Wärmemeldern zu erhöhen, führten zur Entwicklung sogenannter Wärmedifferentialmelder, die nur auf die Anstiegsgeschwindigkeit der Temperatur empfindlich reagieren. Aber auch mit dieser Technik läßt sich das Frühstadium eines Brandes, welches in der Regel ein Schwelbrand ist, nicht befriedigend erfassen. Auf der anderen Seite wäre es nicht sinnvoll, die Detektionsschwelle von Wärmemeldern weiter herabzusetzen. Dies würde, wie Untersuchungen gezeigt haben, zu häufigen Fehlauslösungen führen.

Ein anderes Detektionsverfahren besteht darin, die von einer Flamme ausgehende Wärmestrahlung als Brandkriterium auszuwerten. Im Falle eines offenen Feuers, welches keine vorhergehende Schwelphase kennt, wie beispielsweise alle Flüssigkeitsbrände, stellen solche Melder die schnellsten Detektoren dar. Um sie gegenüber Täuschungsgrößen unempfindlich zu machen, nutzen sie das stets vorhandene Flackern einer Flamme aus. Diese Strahlungsfluktuation besitzt brandspezifische Eigenschaften und kann zur Unterscheidung von Täuschungsgrößen herangezogen werden. Durch die Verwendung geeigneter Filter ist es gelungen, störende Einflüsse fremder Lichtquellen weitgehend auszuschalten.

Allerdings weisen auch diese Melder den bereits erwähnten Nachteil auf, nicht in der Lage zu sein, die Schwelphase eines Brandes erfassen zu können. Hinzukommt, daß Flammenmelder in direkter optischer Verbindung zur Lichtquelle stehen müssen, d.h. sie müssen die Flamme "sehen". Es wurde bereits darauf hingewiesen, daß die Brandkenngröße "Temperatur" ein Charakteristiikum eines jeden Brandes darstellt. Eine Temperaturerhöhung des Brandmaterials äußert sich einmal in der Emission von Wärmestrahlung, zum andern führt sie zu einer Erhöhung der den Brandherd umgebenden Lufttemperatur. Die Folge ist ein Wärmekonvektionsstrom, der einmal die Verbrennungsprodukte an die Raumdecke befördert und zum andern dort zu Temperaturfluktuationen führt. Bei Ausnutzung dieses Effekts zur Brandfrüherkennung muß jedoch auch mit Fehlauslösungen durch Täuschungsgrößen gerechnet werden, da auch Wärmequellen, welche nicht von einem Brand herrühren (Heizöfen, Gasbrenner etc.), zu Temperaturfluktuationen an der Raumdecke führen können.

Grundlegende und umfangreiche Messungen der durch Brände verursachten Temperaturfluktuation in der Nähe der Raumdecke lieferten zunächst das qualitative Ergebnis, daß der zeitliche Verlauf der Temperaturschwankungen brandspezifische Eigenschaften aufweist, was dazu benutzt werden kann, echte Brände von Täuschungsgrößen zu unterscheiden. Durch Analyse des Frequenzspektrums der Ausgangssignale von Temperatursensoren konnte ferner quantitativ nachgewiesen werden, daß der überwiegende Teil der auftretenden Fluktuationen im Bereich von 0,1 Hz bis 20 Hz liegt. Schickt man die Ausgangssignale durch ein Filter mit einer entsprechenden Durchlaßcharakteristik so lassen sich Störgrößen wirkungsvoll eliminieren, ohne die Detektionssicherheit von echten Bränden negativ zu beeinflussen. Voraussetzung sind natürlich Temperatursensoren, welche in der Lage sind, die schnellen Temperaturänderungen trägheitslos zu erfassen. Ferner muß sichergestellt sein, daß wirklich nur die Lufttemperatur gemessen wird und nicht die Wärmestrahlung.

In der EP-A2-0'024'370 ist ein Brandmelder beschrieben, in dem ein temperaturempfindliches Element aus einer Formgedächtnislegierung vorgesehen ist, welches nach einer Kaltverformung bei Erwärmung auf eine kritische Temperatur in die ursprünglich eingeprägte Form zurückkehrt und diese Form auch bei nachfolgender Wiederabkühlung beibehält. Dadurch, daß das temperaturempfindliche Element in den Strahlungsbereich eines optischen Rauchmelders hineinschwenkt oder den Ionenstrom eines Ionisationsrauchmelders herabsetzt, so als wenn Rauch vorhanden wäre, wird bei Überschreiten einer vorbestimmten Temperatur ein Alarm ausgelöst. Ene Alarmauslösung erfolgt dabei erst, wenn die Temperatur in der näheren Umgebung des Brandmelders eine bestimmte Temperatur, die aus Sicherheitsgründen gegen Fehlalarme ziemlich hoch angesetzt werden muß, überschritten wird. Zur Früherkennung von Bränden ist das temperaturempfindliche Element dieses Brandmelders nicht geeignet.

In der US-PS-4,065,758 ist ein thermischer Brandmelder beschrieben, bei dem die Alarmauslösung erfolgt, wenn die Geschwindigkeit der Temperaturerhöhung in der Nähe des Brandmelders einen vorbestimmten Wert überschreitet. Auch bei diesem Brandmelder besteht das Problem, daß die Alarmauslösung erst erfolgt, wenn der Brand so weit fortgeschritten ist, daß in der Nähe des Brandmelders eine beträchtliche Temperaturerhöhung erfolgt ist.

In der CH-PS-519'761 ist ein Brandmelder beschrieben, bei dem der mit einer Frequenz im Bereich von 2 bis 20 Hz schwingende unregelmäßige Anteil eines Ausgangssignals eines photoelektrischen Elements zur Alarmgabe ausgewertet wird. Bei diesem Brandmelder kann eine Alarmauslösung erst erfolgen, wenn sich bei dem Brand offene Flammen gebildet haben.

Ausgehend von diesem Stand der Technik hat sich die vorliegende Erfindung die Aufgabe gestellt, ein neues Verfahren zur Früherkennung von Bränden zu schaffen, welches die Nachteile der bekannten Verfahren vermeidet und insbesondere selbst bei einer Erkennung von Bränden in der Anfangsphase eines Schwelbrandes eine erhöhte Sicherheit gegenüber Fehlalarmen bietet.

Die Aufgabe der vorliegenden Erfindung besteht ferner darin, einen Brandmelder zur Verwendung in dem erfindungsgemäßen Verfahren zu schaffen, welcher ohne erheblichen Schaltungsaufwand eine verbesserte Sicherheit gegen Fehlalarme bietet.

Die Aufgabe der vorliegenden Erfindung besteht ferner darin, die Fehlalarmanfälligkeit von Brandmeldern, welche auf mehr als eine bei der Entstehung eines Brandes auftretende Brandkenngröße sehr empfindlich reagieren, wobei ein Kriterium die Temperaturerhöhung in der Umgebung eines Brandes darstellt, zu verringern.

Die Aufgabe der vorliegenden Erfindung besteht ferner darin, einen Brandmelder zu schaffen, der trägheitslos auf die durch offene Brände erzeugte Temperaturfluktuationen anspricht und der unempfindlich gegenüber Wärmestrahlung ist.

Diese Aufgabe wird bei einem Verfahren der eingangs genannten Art durch die kennzeichnenden Merkmale des Patentanspruchs 1 gelöst. Ein in dem erfindungsgemäßen Verfahren verwendbarer neuer Brandmelder ist im Patentanspruch 4 definiert; bevorzugte Ausführungsformen der Erfindung und Ausgestaltungen sind in den abhängigen Patentansprüchen 2, 3 und 5 bis 17 definiert.

Durch Auswertung brandspezifischer Eigenschaften der Temperaturschwankungen werden brandsimulierende Täuschungsgrößen weitgehend ausgeschaltet. Gemäß einer bevorzugten Ausführungsform des erfindungsgemäßen Verfahrens wird ein zweites Brandkriterium ausgewertet. Besonders bevorzugt ist es dabei, daß in dem Brandmelder ein zweiter Sensor vorgesehen wird, der auf ein anderes Brandkriterium, vorzugsweise auf ein Brandaerosol, anspricht; insbesondere ist der zweite Sensor ein optischer Rauchsensor oder ein Ionisationsrauchsensor.

Gemäß einer bevorzugten Ausführungsform der Erfindung weist der erfindungsgemäße Brandmelder Mittel auf, welche bewirken, daß die in dem Luftstrom vorhandenen, auf einen Brand zurückzuführenden Temperaturfluktuationen unverfälscht auf den Sensor übertragen werden. Vorzugsweise sind die Mittel so konstruiert, daß die Luft innerhalb des Brandmelders auf dem Weg zum Temperatursensor laminar strömt, damit die Temperaturfluktuationen nicht gestört werden.

Gemäß einer weiteren bevorzugten Ausführungsform der Erfindung sind die Mittel so konstruiert, daß die Luft innerhalb des Brandmelders möglichst rasch zum Temperatursensor geführt wird, damit sie sich nicht abkühlt und ferner so, daß an der Sensoroberfläche ein guter Wärmeaustausch stattfindet.

Gemäß einer weiteren bevorzugten Ausführungsform der Erfindung sind die konstruktiven Mittel so ausgebildet, daß sie zusammen mit dem Gehäuse des Brandmelders eine Lufteintrittsöffnung bilden, welche einen nach außen offenen Trichter bildet, der sich zu der in der Achse des Brandmelders angeordneten Meßkammer hin verengt, vorzugsweise sind dabei an der Innenseite der Lufteintrittsöffnung radial verlaufende Rippen angebracht, welche die einströmende Luft in die Meßkammer leiten. Insbesondere kann der Trichter einen Trichtermund mit einem verhältnismäßig großen Einlaßquerschnitt und einen Trichterhals mit einem gegenüber dem Einlaßquerschnitt kleinen Auslaßquerschnitt aufweisen.

Gemäß einer weiteren bevorzugten Ausführungsform der Erfindung sind die konstruktiven Mittel so ausgebildet, daß die Oberfläche des Temperatursensors die eine Wand der Meßkammer bildet und daß der freie Raum der Meßkammer nicht größer ist als das Volumen des Temperatursensors, wobei vorzugsweise an der Eintrittsstelle der Luft in die Meßkammer konstruktive Mittel angeordnet sind, die eine Verwirbelung der Luft bewirken. Als besonders geeignet zur Verwirbelung der Luft haben sich Stäbe, bzw. Leisten erwiesen, wobei darauf geachtet werden muß, daß die Luft durch diese Mittel nicht abgekühlt wird und die Temperaturfluktuationen nicht gestört werden, bevor die Luftströmung den Temperatursensor erreicht.

Gemäß einer Ausgestaltung des erfindungsgemäßen Brandmelders ist der Trichter rotationssymmetrisch in der Weise ausgebildet, daß sein Längsschnitt dem Längsschnitt eines Venturi-Rohrs entspricht.

Gemäß einer weiteren bevorzugten Ausgestaltung des erfindungsgemäßen Brandmelders, weist dieser Schaltelemente auf, welche so ausgelegt sind, daß sie die Signale des Brandaerosolsensors und diejenigen des Temperatursensors logisch miteinander verknüpfen können. Vorzugsweise sind die Schaltelemente so ausgelegt, daß die logische Verknüpfung derart erfolgt, daß dann ein Signal am Ausgang der Ausgangsschaltung erzeugt wird, wenn beide Sensoren bestimmte Signale gleichzeitig erzeugen. Hierbei ist es besonders bevorzugt, wenn in dem Auswertekanal für den Temperatursensor und in dem Auswertekanal für den Aerosolsensor Schaltelemente vorgesehen sind, welche einen Schwellenwert definieren; wobei weitere Schaltelemente vorgesehen sind, welche so ausgelegt sind, dass der Schwellenwert in dem Auswertekanal für den Aerosolsensor herabgesetzt wird, wenn das Ausgangssignal in dem Auswertekanal für den Tempratursensor einen vorbestimmten Schwellenwert überschreitet.

Die Erfindung wird an Hand der in den Zeichnungen dargestellten Ausführungsbeispielen näher erläutert. Es zeigen

Figur 1     das Blockschaltbild eines Brandmelders gemäß Erfindung,

Figur 2     den Aufbau eines in einem erfindungsgemäßen Brandmelder verwendbaren Temperatursensors im Längsschnitt,

Figur 3     eine graphische Darstellung der Empfindlichkeit eines Temperatursensors in Abhängigkeit von der Frequenz,

Figur 4     die Durchlaßcharakteristik eines Bandpaßfilters für einen erfindungsgemäßen Brandmelder,

Figur 5     das Blockschaltbild einer verbesserten Ausführungsform eines erfindungsgemäßen Brandmelders, bei dem ein zweites Brandkriterium ausgewertet wird,

Figur 6     im Längsschnitt den Aufbau eines erfindungsgemäßen Brandmelders mit einem Temperatursensor und

Figur 7     einen Querschnitt durch den Brandmelder gemäß Figur 6 entlang der Linie I-I.

4

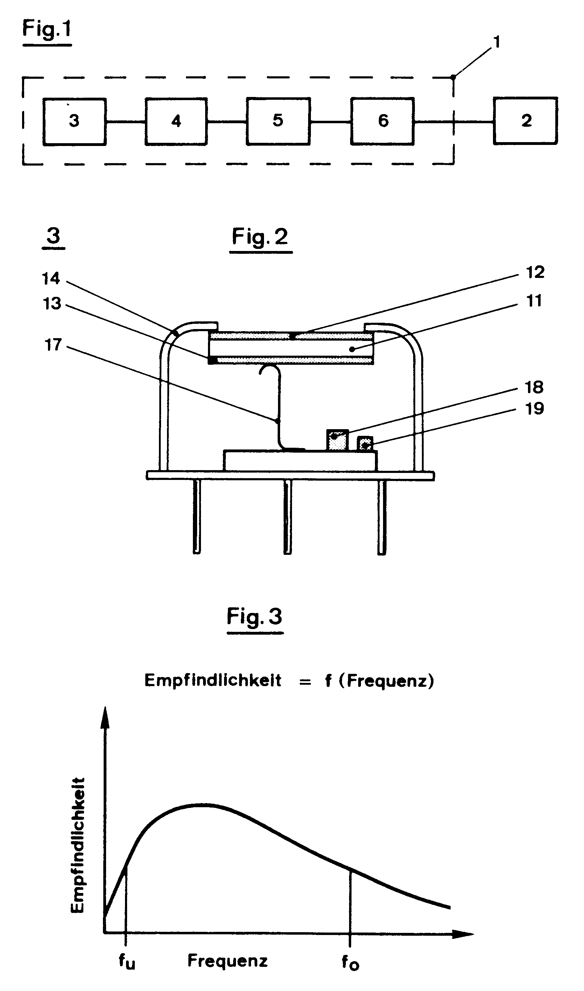

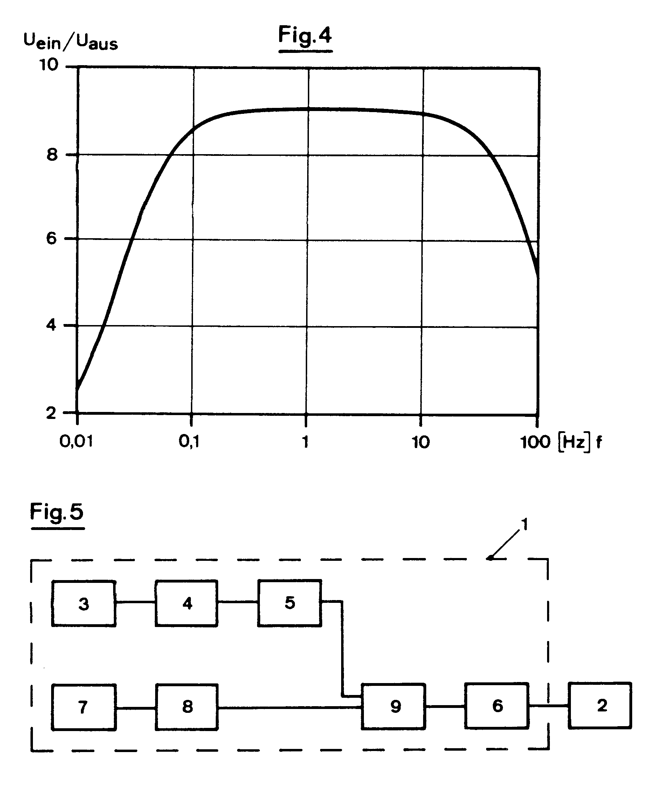

In Figur 1 ist das Blockschaltbild eines erfindungsgemäßen Brandmelders dargestellt. Der Temperatursensor 3 ist ein pyroelektrischer Detektor, dessen Aufbau im Zusammenhang mit Figur 2 näher erläutert wird. Das Ausgangssignal des Temperatursensors 3 wird einem elektrischen Bandpaßfilter 4 zugeführt, welches eine Durchlaßcharakteristik aufweist, wie sie in Figur 4 dargestellt ist. Das Signal wird weiter einem RMS-DC-Wandler 5 und einer Ausgangsschaltung 6 zugeführt, welche die Signale zur Weiterleitung an eine Zentrale 2 aufbereitet.

Der in Figur 2 im Längsschnitt gezeigte Temperatursensor 3 ist ein pyroelektrischer Detektor, welcher in der Lage ist, schnelle Temperaturänderungen zu erfassen. Das aktive Element 11 besteht aus einem Lithiumtantalat-Monokristall, LiTaO3. An Stelle von Lithiumtantalat können andere pyroelektrische Materialien, z.B. modifizierte Bleizirkonat-Bleititanat-Keramik [Pb(Zr,Ti)O3; PZT], Polyvinylidenfluorid (PVDF) oder ähnliche, verwendet werden. Auf die äußere Oberfläche des aktiven Elements 11 ist eine 50 nm dicke Schicht 12 aus Nickel aufgedampft, welche elektrisch leitend direkt mit dem Sensorgehäuse 14 des Sensors 3 verbunden ist und gleichzeitig als Elektrode und als IR-Strahlungsreflektor dient. Da die auftreffende Infrarot-Strahlung durch die Schicht 12 reflektiert wird, ist der Temperatursensor 3 nur auf Konvektionswärme empfindlich. Die innere Oberfläche des aktiven Elements 11 ist mit einer zweiten Elektrode 13 bedeckt, die über einen Kontakt 17 mit dem Gate-Anschluß eines Feldeffekttransistors 18 verbunden ist. Der zugehörige Gate-Widerstand 19, der parallel zum Temperatursensor 3 liegt, wird so eingestellt, daß die langsamsten noch zu detektierenden Temperaturschwankungen (Fluktuationen) die Frequenz

$$f = \frac{1}{2 \cdot P \cdot RG \cdot CG}$$

aufweisen; wobei P die Ludolfsche Zahl, RG den Widerstand des Gatewiderstands des Feldeffekttransistors 18 und CG die Kapazität des Sensors 3 bedeuten.

Die thermische Zeitkonstante Tth, welche durch den geometrischen Aufbau des Sensors 3 gegeben ist, bestimmt die obere Grenzfrequenz fo für die Temperaturschwankungen, welche der Sensor 3 noch zu erfassen in der Lage ist. Die Empfindlichkeit des Sensors 3 in Abhängigkeit von der Frequenz f der Temperaturschwankungen ist in Figur 3 graphisch dargestellt. In der Figur 3 bedeuten fu die untere und fo die obere Grenzfrequenz bei denen der Sensor ein auswertbares Signal abgibt.

Wie oben beschrieben wird das Ausgangssignal des Temperatursensors 3 einem elektrischen Bandpaßfilter 4 zugeführt. In Figur 4 ist die Durchlaßcharakteristik eines elektrischen Bandpaßfilters 4 in Abhängigkeit von der Frequenz f dargestellt. Auf der Ordinatenachse ist das Verhältnis von Eingangs- zu Ausgangsspannung aufgetragen, auf der Abszissenachse die Frequenz f in Hertz. Das Filter 4 ist so ausgelegt, daß Frequenzen unterhalb von 0,1 Hz und oberhalb von 20 Hz nicht mehr durchgelassen werden.

Der Ausgang des Bandpaßfilters 4 ist mit einem Root-Mean-Square-Gleichsspannungs-Wandler 5 (RMS-DC-Wandler) verbunden, dessen Ausgangssignal, Urms, in folgender Weise von der angelegten Spannung abhängt:

$$Urms = \sqrt[2]{\frac{1}{T} \int_0^T u^2(t) \cdot dt,}$$

worin T die Integrationsdauer des Signals, u(t) die dem RMS-DC-Wandler zugeführte Spannung und t die Zeit bedeuten. Wandler dieser Art sind z.B unter der Bezeichnung "Analog Devices AD 637" im Handel erhältlich. Das Ausgangssignal Urms des RMS-DC-Wandlers wird dann einer Ausgangsschaltung 6 zugeführt, welche die Signale zur Übertragung an die Zentrale 2 aufbereitet.

Eine weitere Verbesserung der Fehlalarmsicherheit des Brandmelders 1 läßt sich dadurch erreichen, daß das Ausgangssignal des Bandpaßfilters 4 nicht einem RMS-DC-Wandler 5 sondern nach Digitalisierung einem nicht dargestellten Mikroprozessor zugeführt wird, wo es in einem speziellen Signalauswerte-Algorithmus verarbeitet wird, so daß nur brandspezifische Verläufe der Temperaturfluktuation verarbeitet werden.

In Figur 5 ist eine weitere verbesserte Ausführungsform eines erfindungsgemäßen Brandmelders 1 dargestellt. Durch gleichzeitige Messung von Temperaturfluktuation und anderen Brandkriterien, beispielsweise die Detektion von Verbrennungsprodukten, welche gleichzeitig mit dem Konvektionsstrom an die Raumdecke getragen werden, läßt sich ein besonders täuschungsunempfindlicher Brandmelder herstellen. Der Temperatursensor 3, das Bandpaßfilter 4 und der RMS-DC-Wandler 5 entsprechen der Figur 1. Als zweites Brandkriterium wird das Eindringen von Rauch in den Brandmelder 1 ausgewertet. Zu diesem Zweck ist in dem Gehäuse des Brandmelders 1 ein Streulichtrauchsensor 7 angeordnet, dessen Ausgangssignal in einer Auswerteschaltung 8 aufbereitet wird. Die Ausgangssignale der Auswerteschaltung 8 des Rauchsensors 7 und des RMS-DC-Wandlers 5 werden einer Schwellenwertschaltung 9 zugeführt. Im Normalfall, d.h. wenn weder der Temperatursensor 3 noch der Rauchsensor 7 das Vorhandensein brandspezifischer Kenngrößen anzeigen, weisen beide Auswertekanäle einen vorgegebenen, verhältnismäßig hohen Schwellenwert auf. Wenn nun der Auswertekanal für die Temperaturfluktuation das Auftreten einer brandspezifischen Temperaturfluktuation anzeigt, d.h. wenn der RMS-DC-Wandler 5 ein entsprechendes Ausgangssignal an die Schwellenwertschaltung 9 abgibt, dann wird in der Schwellenwertschaltung 9 der Schwellenwert für das Auftreten von Rauch auf einen Wert herabgesetzt, welcher dem heute üblichen Stand der Normen entspricht. Ein Alarmsignal wird von der Schwellenwertschaltung 9 über die Ausgangsschaltung 6 nur dann an die Zentrale 2 weitergegeben, wenn das Ausgangssignal des Rauchsensors 7 den neu eingestellten Schwellenwert für den Auswertekanal für die Rauchdichte überschreitet.

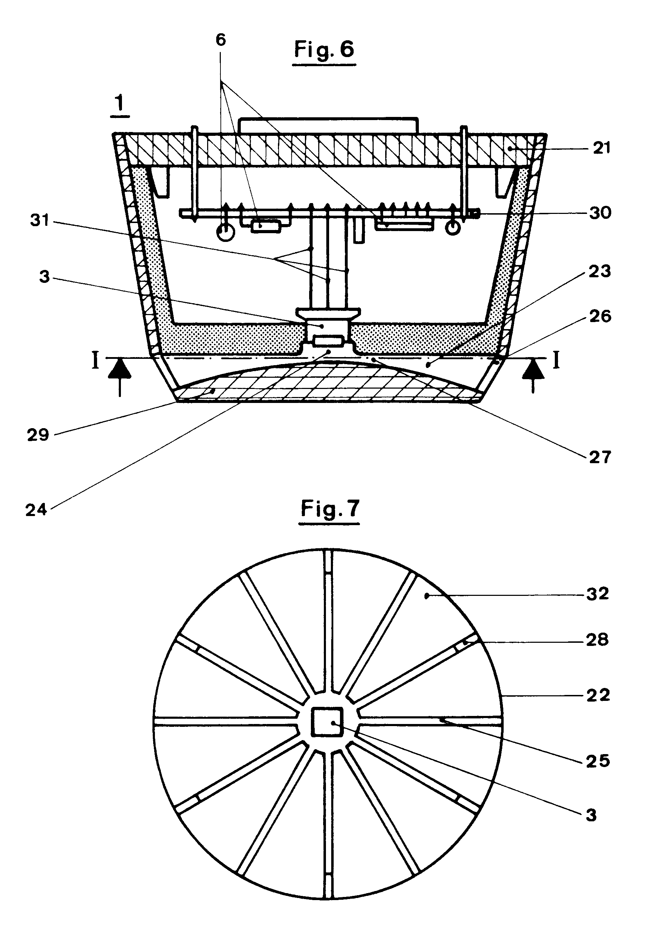

In Figur 6 ist ein erfindungsgemäßer Brandmelder 1 mit einem Temperatursensor 3 im Längsschnitt dargestellt. Auf einer Basisplatte 21, über die der Brandmelder 1 mit einem nicht dargestellten Sockel verbunden werden kann, ist ein (Brandmelder)-Gehäuse 22 aufgesetzt, welches im unteren Teil eine großflächige Lufteintrittsöffnung 23 aufweist, durch welche die Umgebungsluft von allen Seiten her in das Gehäuseinnere einströmen kann. Im Inneren des Gehäuses 22 ist eine Montageplatte 30 vorgesehen, auf welcher die einzelnen Schaltelemente der Ausgangsschaltung 6 montiert sind. Im unteren Teil des Gehäuses 22 befindet sich eine Meßkammer 24, welche in einer Zwischenplatte 32 angeordnet ist. Innerhalb der Meßkammer 24 ist der Temperatursensor 3 angeordnet. Der Sensor 3 ist über elektrische Leitungen 31 mit der Ausgangsschaltung 6 verbunden.

Unterhalb der Meßkammer 24 befindet sich eine Abdeckplatte 29, welche den Temperatursensor 3 vor dem Einfluß direkter Wärmestrahlung schützt und zusammen mit der Zwischenplatte 32 die Lufteintrittsöffnung 23 bildet. Die Abdeckplatte 29 ist durch einige wenige Haltestege 28 mit der Wand des Gehäuses 22 verbunden, so daß der Weg der einströmenden Luft möglichst wenig eingeengt wird. Im einfachsten Fall besteht die Meßkammer 24 aus einer im Zentrum der Zwischenplatte 32 befindlichen Öffnung. Dabei bildet die zylindrische Bohrung der Zwischenplatte 32 die Außenwand der Meßkammer 24, während die Oberfläche des Temperatursensors 3 und Abdeckplatte 29 den oberen und unteren Abschluß der Meßkammer 24 bilden.

Um die Luft nach ihrem Eintritt in die Lufteintrittsöffnung 23 so schnell wie möglich zur Meßkammer 24 zu leiten, ist die Lufteintrittsöffnung 23 trichterförmig ausgebildet, d.h. ihr Lumen verengt sich vom Trichtermund 26 zum Trichterhals 27 stetig, so daß die eintretende Luft beschleunigt wird, ohne daß Turbulenzen eintreten. Durch die Vergrößerung des Lumens beim Eintritt vom Trichterhals 27 in die Meßkammer 24 tritt eine Druckerhöhung in dem eintretenden Luftstrom statt; gleichzeitig tritt durch die Kante am Trichterhals eine Verwirbelung der Luft ein, wodurch ein guter Wärmeübergang von der Luft auf den Temperatursensor 3 erfolgt. Durch diese Anordnung wird erreicht, dass die Temperaturfluktuationen im eintretenden Luftstrom unverfälscht auf den Sensor 3 übertragen werden.

Um die einströmende Luft besser zur Meßkammer 24 zu leiten, können gemäss einer bevorzugten Ausführungsform des Brandmelders 1 Leitflächen oder -flügel radial in der Lufteintrittsöffnung 23 angebracht sein. Diese können auf der oberen Oberfläche der Abdeckplatte 29 oder auf der unteren Oberfläche der Zwischenplatte 32 angebracht sein. In Figur 7 ist ein Querschnitt durch einen Brandmelder gemäß Figur 6 entlang der Linie I-I dargestellt. In diesem Fall sind die Leitflächen als Rippen 25 auf der unteren Oberfläche der Zwischenplßtte 32 ausgebildet.

Abwandlungen der vorbeschriebenen Schaltungen für Brandmelder sind im Rahmen der Erfindung gemäß den Ansprüchen möglich und dem Fachmann geläufig.

**Patentansprüche**

1. Verfahren zur Früherkennung von Bränden mittels eines Brandmelders (1), welcher mindestens einen auf Brandkenngrößen ansprechenden Sensor (3, 7) aufweist, wobei ein wärmeempfindlicher Sensor (3) zur Messung von Temperaturschwankungen vorgesehen ist, dadurch gekennzeichnet, daß man von den bei einem Brand auftretenden Kenngrößen mindestens die Temperaturänderungen der Luft in der unmittelbaren Umgebung des wärmeempfindlichen Sensors (3) trägheitslos und unter Ausschaltung des Einflusses von Wärmestrahlung mißt und diejenigen Temperaturänderungen, welche sich mit einer Frequenz von 0,1 bis 20 Hz ändern, zur Detektion eines Brandes ausnutzt.

2.  Verfahren gemäß Patentanspruch 1, dadurch gekennzeichnet, daß man zusätzlich mindestens eine weitere Brandkenngröße bestimmt und zur Detektion eines Brandes ausnutzt.

3.  Verfahren gemäß Patentanspruch 2, dadurch gekennzeichnet, daß man als weitere Brandkenngröße die in der Umgebung vorhandenen Brandaerosole bestimmt und zur Detektion eines Brandes ausnutzt.

4.  Brandmelder zur Durchführung des Verfahrens gemäß Patentanspruch 1, dadurch gekennzeichnet, daß er mindestens einen in Abhängigkeit von auftretenden Brandkenngrößen elektrische Signale abgebenden Sensor (3, 7), von denen einer ein Temperatursensor (3) ist, konstruktive Mittel (29, 32) zum Schutze des Temperatursensors (3) vor direkter Wärmestrahlung, ein elektrisches Filter (4), welches so ausgelegt ist, daß nur Ausgangsignale des Temperatursensors (3) im Frequenzbereich von 0,1 bis 20 Hz weitergeleitet werden und eine in Abhängigkeit vom elektrischen Ausgangssignal des Sensors (3), bzw. der Sensoren (3, 7) definierte Signale abgebenden Ausgangsschaltung (6), aufweist.

5.  Brandmelder gemäß Patentanspruch 4, dadurch gekennzeichnet, daß er einen zweiten, auf Brandkenngrößen ansprechenden Sensor (7), vorzugsweise einen auf Brandaerosol ansprechenden Sensor, insbesondere einen Streulichtrauchsensor, aufweist.

6.  Brandmelder gemäß Patentanspruch 5, dadurch gekennzeichnet, daß er Schaltelemente aufweist, welche so ausgelegt sind, daß sie die Signale des Brandaerosolsensors (7) und diejenigen des Temperatursensors (3) logisch miteinander verknüpfen können.

7.  Brandmelder gemäß Patentanspruch 6, dadurch gekennzeichnet, daß die Schaltelemente so ausgelegt sind, daß die logische Verknüpfung derart erfolgt, daß dann ein Signal am Ausgang der Ausgangsschaltung (6) erzeugt wird, wenn beide Sensoren (3, 7) bestimmte Signale gleichzeitig erzeugen.

8.  Brandmelder gemäß einem der Patentansprüche 4 bis 7, dadurch gekennzeichnet, daß eine Schwellenwertschaltung (9) vorgesehen ist, welche so ausgelegt ist, daß für die Ausgangssignale der Sensoren (3, 7) vorgegebene Werte als Schwellenwerte festgelegt werden und daß der Schwellenwert für die Erzeugung eines Alarmsignals für den Rauchsensor (7) herabgesetzt wird, wenn der Schwellenwert für den Temperatursensor (3) den entsprechenden vorgegebenen Wert übersteigt.

9.  Brandmelder gemäß Patentanspruch 4, dadurch gekennzeichnet, daß der Temperatursensor (3) in einer in dem Gehäuse (22) befindlichen Meßkammer (24) angeordnet ist und daß anströmende Luft in der Weise in die Meßkammer (24) zum Temperatursensor (3) geleitet wird, daß sie auf dem Weg von der Umgebung des Brandmelders (1) zur Meßkammer (24) keine Turbulenzen erleidet und daß sie in der Meßkammer (24) Turbulenzen erleidet, damit ein optimaler Wärmeübergang von der Luft auf den Temperatursensor (3) erfolgt.

10. Brandmelder gemäß Patentanspruch 9, dadurch gekennzeichnet, daß die konstruktiven Mittel (29, 32) aus einer die Meßkammer (24) aufnehmenden Zwischenplatte (32) und einer die Meßkammer (24) vor direkter Wärmestrahlung schützenden Abdeckplatte (29) bestehen, welche gemeinsam eine zur Meßkammer (24) führende Lufteintrittsöffnung (23) bilden.

11. Brandmelder gemäß Patentanspruch 10, dadurch gekennzeichnet, daß die Lufteintrittsöffnung (23) einen nach außen offenen Trichter bildet, der sich zu der in der Achse des Brandmelders (1) angeordneten Meßkammer (24) hin verengt.

12. Brandmelder gemäß einem der Patentansprüche 9 bis 11, dadurch gekennzeichnet, daß die Oberfläche des Temperatursensors (3) die eine Wand der Meßkammer (24) bildet und daß der freie Raum der Meßkammer (24) nicht größer ist als das Volumen des Temperatursensors (3).

13. Brandmelder gemäß einem der Patentansprüche 9 bis 13, dadurch gekennzeichnet, daß an der Eintrittsstelle der Luft in die Messkamer (24) konstruktive Mittel angeordnet sind, die eine Verwirbelung der Luft bewirken.

14. Brandmelder gemäß Patentanspruch 13, dadurch gekennzeichnet, daß die konstruktiven Mittel zur Verwirbelung der Luft aus im Strömungsweg der Luft angeordneten Stäben, bzw. Leisten bestehen.

15. Brandmelder gemäß Patentanspruch 10, dadurch gekennzeichnet, daß an der Innenseite der Lufteintrittsöffnung (23) radial verlaufende Rippen (25) angebracht sind, welche die einströmende Luft in die Meßkammer (24) leiten.

16. Brandmelder gemäß Patentanspruch 11, dadurch gekennzeichnet, daß der Trichter rotationssymmetrisch ausgebildet ist und sein Längsschnitt dem Längsschnitt eines Venturi-Rohrs entspricht.

17. Brandmelder gemäß einem der Patentansprüche 11 bis 16, dadurch gekennzeichnet, daß der Trichter einen Trichtermund (26) mit einem verhältnismäßig großen Einlaßquerschnitt und einen Trichterhals (27) mit einem gegenüber dem Einlaßquerschnitt kleinen Auslaßquerschnitt aufweist.

**Claims**

1. Method of early detection of fires by means of a fire detector (1), which has at least one sensor (3, 7) responding to characteristic fire variables, a heat-sensitive sensor (3) being provided for measuring temperature variations, characterised in that of the characteristic variables occurring in the event of a fire at least the temperature changes of the air in the direct ambience of the heat-sensitive sensor (3) are measured inertialessly and excluding the influence of thermal radiation, and those temperature changes which change with a frequency of 0.1 to 20 Hz are used for the detection of a fire.

2. Method according to Patent Claim 1, characterised in that, in addition, at least one further characteristic fire variable is determined and used for the detection of a fire.

3. Method according to Patent Claim 2, characterised in that the fire aerosols present in the ambience are determined as a further characteristic fire variable and used for the detection of a fire.

4. Fire detector for carrying out the method according to Patent Claim 1, characterised in that it has at least one sensor (3, 7), of which one is a temperature sensor (3), emitting electric signals as a function of characteristic fire variables occurring, structural means (29, 32) for protecting the temperature sensor (3) against direct thermal radiation, an electric filter (4), which is designed such that only output signals of the temperature sensor (3) in the frequency range from 0.1 to 20 Hz are passed on and an output circuit (6), emitting signals defined as a function of the electric output signal of the sensor (3), or of the sensors (3, 7).

5. Fire detector according to Patent Claim 4, characterised in that it has a second sensor (7), responding to characteristic fire variables, preferably a sensor responding to fire aerosol, in particular a scattered-light smoke sensor.

6. Fire detector according to Patent Claim 5, characterised in that it has switching elements which are designed such that they can combine by a logic operation the signals of the fire aerosol sensor (7) and those of the temperature sensor (3).

7. Fire detector according to Patent Claim 6, characterised in that the switching elements are designed such that the logic operation is performed in such a way that a signal is generated at the output of the output circuit (6) whenever both sensors (3, 7) generate certain signals simultaneously.

8. Fire detector according to one of Patent Claims 4 to 7, characterised in that a threshold circuit (9) is provided, which is designed such that values predetermined for the output signals of the sensors (3, 7) are fixed as threshold values and in that the threshold value for the generation of an alarm signal for the smoke sensor (7) is lowered if the threshold value for the temperature sensor (3) exceeds the corresponding predetermined value.

**9.** Fire detector according to Patent Claim 4, characterised in that the temperature sensor (3) is arranged in a measuring chamber (24), located in the housing (22), and in that onflowing air is directed into the measuring chamber (24) to the temperature sensor (3) in such a way that it does not undergo any turbulences on the way from the ambience of the fire detector (1) to the measuring chamber (24) and that it undergoes turbulences in the measuring chamber (24), in order that an optimum heat transfer from the air to the temperature sensor (3) takes place.

**10.** Fire detector according to Patent Claim 9, characterised in that the structural means (29, 32) comprise an intermediate plate (32), accommodating the measuring chamber (24), and a cover plate (29), protecting the measuring chamber (24) against direct thermal radiation, which plates together form an air entry opening (23) leading to the measuring chamber (24).

**11.** Fire detector according to Patent Claim 10, characterised in that the air entry opening (23) forms an outwardly open funnel which narrows towards the measuring chamber (24), arranged in the axis of the fire detector (1).

**12.** Fire detector according to one of Patent Claims 9 to 11, characterised in that the surface of the temperature sensor (3) forms the one wall of the measuring chamber (24) and in that the free space of the measuring chamber (24) is not greater than the volume of the temperature sensor (3).

**13.** Fire detector according to one of Patent Claims 9 to 13, characterised in that structural means which effect a swirling of the air are arranged at the entry point of the air into the measuring chamber (24).

**14.** Fire detector according to Patent Claim 13, characterised in that the structural means for swirling the air comprise bars or strips arranged in the flow path of the air.

**15.** Fire detector according to Patent Claim 10, characterized in that radially running ribs (25), which direct the inflowing air into the measuring chamber (24), are arranged on the inside of the air entry opening (23).

**16.** Fire detector according to Patent Claim 11, characterized in that the funnel is of a rotationally symmetrical design and its longitudinal section corresponds to the longitudinal section of a Venturi tube.

**17.** Fire detector according to one of Patent Claims 11 to 16, characterized in that the funnel has a funnel mouth (26) with a relatively large inlet cross-section and a funnel neck (27) with a small outlet cross-section in comparison with the inlet cross-section.

**Revendications**

**1.** Procédé de détection précoce des incendies au moyen d'un avertisseur d'incendie (1), qui possède au moins un capteur (3,7) sensible à des grandeurs caractéristiques d'un incendie, un capteur thermosensible (3) étant prévu pour la mesure de fluctuations de température, caractérisé par le fait que parmi les grandeurs caractéristiques se produisant lors d'un incendie, on mesure au moins les fluctuations de température de l'air dans l'environnement immédiat du capteur thermosensible (3), et ce sans inertie et en supprimant l'influence du rayonnement thermique et pour la détection d'un incendie on utilise les variations de température, qui varient à une fréquence comprise entre 0,1 et 20 Hz.

**2.** Procédé suivant la revendication 1, caractérisé par le fait qu'on détermine en supplément au moins une autre grandeur caractéristique d'un incendie et qu'on l'utilise pour la détection d'un incendie.

**3.** Procédé suivant la revendication 2, caractérisé par le fait qu'on détermine, comme autre grandeur caractéristique d'un incendie, les aérosols produits par l'incendie et présents dans l'environnement et qu'on les utilise pour la détection d'un incendie.

**4.** Avertisseur d'incendie pour la mise en oeuvre du procédé suivant la revendication 1, caractérisé par le fait qu'il comporte au moins un capteur (3,7), qui fournit des signaux électriques en fonction de grandeurs caractéristiques survenant lors d'un incendie, l'un de ces capteurs étant un capteur de température (3), des moyens (29,32) servant à protéger le capteur de température (3) du rayonnement thermique direct, un filtre électrique (4) qui est conçu de telle sorte que seuls des signaux de sortie du capteur de température (3) situés dans la gamme des fréquences de 0,1 à 20 Hz sont retransmis et un circuit de sortie (6) qui envoie des signaux définis en fonction du signal électrique de sortie du capteur (3) ou des capteurs (3,7).

5. Avertisseur d'incendie suivant la revendication 4, caractérisé par le fait qu'il comporte un second capteur (7), sensible à des grandeurs caractéristiques d'un incendie, de préférence un capteur sensible à un aérosol dégagé par l'incendie, notamment un capteur de fumée à dispersion de la lumière.

6. Avertisseur d'incendie suivant la revendication 5, caractérisé par le fait qu'il comporté des éléments de commutation qui sont agencés de manière à pouvoir combiner logiquement entre eux les signaux du capteur (7) détectant des aérosols dégagés par l'incendie et les signaux du capteur de température (3).

7. Avertisseur d'incendie suivant la revendication 6, caractérisé par le fait que les éléments de commutation sont agencés de telle sorte que la combinaison logique est réalisée de telle manière qu'un signal est produit à la sortie du circuit de sortie (6) lorsque les deux capteurs (3,7) produisent simultanément des signaux déterminés.

8. Avertisseur d'incendie suivant l'une des revendications 4 à 7, caractérisé par le fait qu'il est prévu un circuit à valeur de seuil (9) qui est conçu de telle sorte que des valeurs prédéterminées pour les signaux de sortie des capteurs (3,7) sont fixées en tant que valeurs de seuil et que la valeur de seuil pour la production d'un signal d'alerte pour le capteur de fumée (7) est réduite lorsque la valeur de seuil pour le capteur de température (3) dépasse la valeur prédéterminée correspondante.

9. Avertisseur d'incendie suivant la revendication 4, caractérisé par le fait que le capteur de température (3) est disposé dans une chambre de mesure (24) située dans le boîtier (22), et que l'air arrivant est dirigé dans la chambre de mesure (24) en direction du capteur de température (3) de telle sorte qu'il ne subit aucune turbulence sur son trajet de déplacement depuis l'environnement de l'avertisseur d'incendie (1) jusqu'à la chambre de mesure (24) et qu'il subit des turbulences dans la chambre de mesure (24), ce qui produit un transfert thermique optimum de l'air au capteur de température (3).

10. Avertisseur d'incendie suivant la revendication 9, caractérisé par le fait que les moyens (29,32) sont constitués par une plaque intercalaire (32), de réception de la chambre de mesure (24), et par une plaque de fermeture (22), qui protège la chambre de mesure (24) d'un rayonnement thermique direct, ces plaques formant en commun une ouverture d'entrée de l'air (23) qui conduit à la chambre de mesure (24).

11. Avertisseur d'incendie suivant la revendication 10, caractérisé par le fait que l'ouverture d'entrée de l'air (23) forme un entonnoir ouvert en direction de l'extérieur et qui se rétrécit en direction de la chambre de mesure (24) disposée sur l'axe de l'avertisseur d'incendie (1).

12. Avertisseur d'incendie suivant l'une des revendications 9 à 11, caractérisé par le fait que la surface du capteur de température (3) forme une paroi de la chambre de mesure (24) et que l'espace libre de la chambre de mesure (24) n'est pas supérieur au volume du capteur de température (3).

13. Avertisseur d'incendie suivant l'une des revendications 9 à 13, caractérisé par le fait qu'au niveau du point d'entrée de l'air dans la chambre de mesure (24) sont disposés des moyens, qui font tourbillonner l'air.

14. Avertisseur d'incendie suivant la revendication 13, caractérisé par le fait que les moyens pour faire tourbillonner l'air sont constitués par des barres ou des barrettes disposées dans le trajet d'écoulement de l'air.

15. Avertisseur d'incendie suivant la revendication 10, caractérisé par le fait que sur le côté intérieur de l'ouverture d'entrée de l'air (23) sont disposées des nervures radiales (25), qui guident l'air arrivant dans la chambre de mesure (24).

**16.** Avertisseur d'incendie suivant la revendication 11, caractérisé par le fait que l'entonnoir possède une symétrie de révolution et que sa section longitudinale correspond à la section longitudinale d'un tube à venturi.

**17.** Avertisseur d'incendie suivant l'une des revendications 11 à 16, caractérisé par le fait que l'entonnoir possède une embouchure (26) possédant une section transversale d'admission relativement grande, et un col (27) possédant une section transversale de sortie petite par rapport à la section transversale d'admission.

## Fig.1

1

3 — 4 — 5 — 6 — 2

## 3

## Fig. 2

14
13
17

12
11

18
19

## Fig. 3

**Empfindlichkeit = f (Frequenz)**

Empfindlichkeit

$f_u$    Frequenz    $f_o$

## Fig.4

$U_{ein}/U_{aus}$

## Fig.5

Fig. 6

Fig. 7